Europäisches Patentamt

**European Patent Office**

**Office européen des brevets**

(11) Publication number: **0 089 428**

**A1**

(12) # EUROPEAN PATENT APPLICATION

(21) Application number: **82301486.5**

(22) Date of filing: **23.03.82**

(51) Int. Cl.³: **A 47 J 41/00**

(43) Date of publication of application:
**28.09.83 Bulletin 83/39**

(84) Designated Contracting States:
**DE FR GB IT NL**

(71) Applicant: **Asahara, Toshio**
**1017-31 Ouaza Uchiage**
**Neyagawa Osaka(JP)**

(72) Inventor: **Asahara, Toshio**
**1017-31 Ouaza Uchiage**
**Neyagawa Osaka(JP)**

(74) Representative: **Laredo, Jack Joseph et al,**
**Elkington and Fife High Holborn House 52/54 High**
**Holborn**
**London, WC1V 6SH(GB)**

(54) Thermally insulated ceramic container and method for manufacture thereof.

(57) A generally cylindrical thermally insulated ceramic container (A) of imposing appearance suitable for use on dining tables comprises a double-wall ceramic container and an insulation (4) formed of a foaming resin of low thermal conductivity and contained in the inner cavity interposed between the two walls. The thermally insulated ceramic container is produced by preparing an inner green container wall (1) and an outer green container wall (2) one size larger, both of potter's dough, joining the two green container walls along the upper edges (a) thereof with the walls radially opposed to each other across an intervening space (inner cavity), firing the resultant molded green double-wall container thereby producing a double-wall ceramic container, injecting an unfoamed or semi-foamed foaming resin (4) into the inner cavity through a perforation (b) bored in advance in the outer wall, and foaming the resin within the inner cavity.

Fig.3

### THERMALLY INSULATED CERAMIC CONTAINER
### AND METHOD FOR MANUFACTURE THEREOF

#### BACKGROUND OF THE INVENTION

This invention relates to a thermally insulated container typified by a thermos bollte.

Thermally insulated containers come in a rich variety of types. They invariably lack imposingness and fall short of satisfying the general disposition toward preference for articles of high quality for use on dining tables.

#### SUMMARY OF THE INVENTION

This invention is aimed at providing a novel thermally insulated container made of a heretofore totally unthinkable ceramic material basically in a double-wall structure and a method for the manufacture of the container. The container contemplated by this invention has the appearance of a ceramic jar. The thermally insulated container, therefore, acquires a highly imposing appearance when it is finished with patterns painted on the outer surface thereof with glaze. Alternatively the container acquires a simple appearance rich in folk-craftsmanship when it is finished with its outer surface left unglazed. This invention, therefore, provides novel table-top containers of a unique concept.

The present invention will be described specifically below with reference to preferred embodimetns thereof illustrated in the accompanying drawings.

#### BRIEF DESCRIPTION OF THE DRAWINGS

Fig. 1 is a longitudinal cross section fo an inner and an outer green container wall to be used in this invention;

FIG. 2 is a longitudinal cross section of a double-wall container A;

FIG. 3 is a longitudinal cross section of a thermally insulated ceramic container according to the present invention; and

FIG. 4 is a longitudinal cross section illustrating another preferred embodiment of this invention.

## DETAILED DESCRIPTION OF THE INVENTION

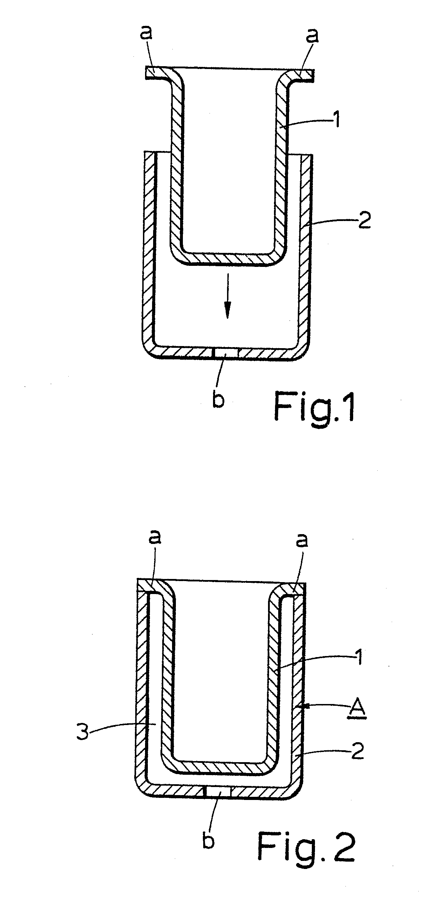

A dough prepared by mixing clay or some other raw material for ceramics with water is molded such as with a potter's wheel to produce an inner green container wall 1 of the chape of a wide-mouthed bottle and an outer green container wall 2 of a similar shape having a wide mouth one size larger as illustrated in FIG. 1. If, in this case, a flange "a" is formed along the circumference of the opening of either of the green container walls 1 and 2, it will facilitate the subsequent union of the two green container walls. In the diagram, "b" denotes a small perforation measuring about 5 mm in diameter and provided in the bottom of the outer green container wall 2.

The inner green container wall 1 is inserted into the outer green container wall 2 until the two walls 1, 2 are set in position radially opposite each other. Then, they are intimately joined to each other along their upper edges as illustrated in FIG. 2. When the flange "a" is formed in advance in either of the two green container walls 1 and 2, the circumferential edge of this flange "a" and the upper circumferential edge of the other container wall are joined to each other by a technique known to the pottery (such as, for example, the technique by use of "potter's cement"). When the flange "a" is not formed in advance in either of the container walls, a green annular piece equalling the flange "a" is separately formed in advance. This annular piece is mounted to bridge the upper circumferential edges of the inner and outer green container walls 1, 2 and is joined to the edges. In this case, the bottom of the inner green container wall 1 must be kept from falling into direct contact with the bottom of the outer green container wall 2 as by holding the two container walls 1, 2 upside down or using some other effective device.

When a joined green container is completed as illustrated in FIG. 1, it is dried and, with patterns painted with glaze, fired to produce a double-wall ceramic container (hereinafter referred to simply as "double-wall container"). Thereafter, a mixed solution consisting of a resin solution as a starting material for a foaming resin of low thermal conductivity (such as, for example, foaming polyurethane resin) and a foaming agent or a resin solution or granular material preparatorily foamed to a fair extent (hereinafter referred to simply as "semi-foamed material") is injected through the aforementioned perforation b in the bottom into the inner cavity 3 of the double-wall container A and foamed by use of heat or otherwise. Consequently, the product of this invention, namely a thermally insulated ceramic container having an insulation 4

-4-

0089428

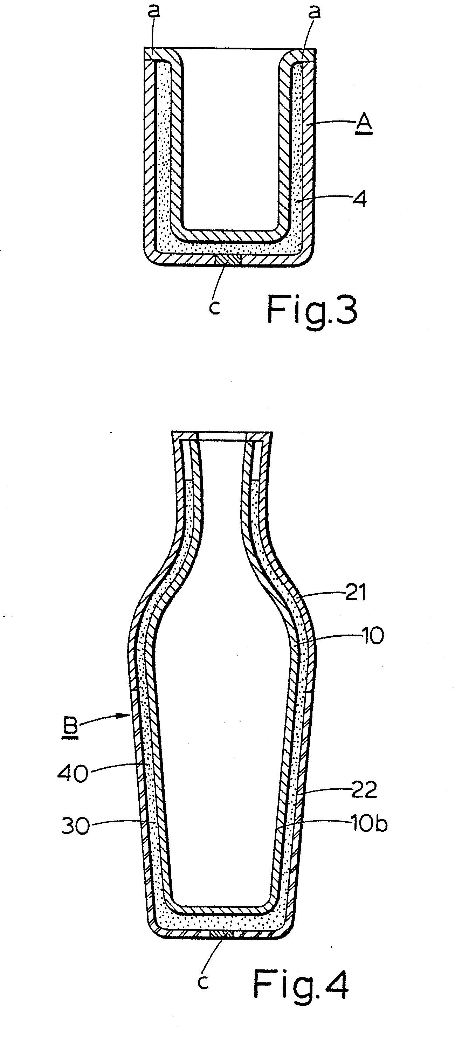

contained in the inner cavity 3 of the two- double-wall container A as illustrated in FIG. 3 is obtained. In the diagram, "c" denotes a stopper for the bottom. FIG. 4 represents another embodiment of this invention. The same dough as described above is molded as with a potter's wheel to produce an inner green container wall 10 of the shape of a Japanese sake server and an upper half member 21 and a lower half member 22 of an outer green container wall similar in shape but one size larger as illustrated in FIG. 4. Similarly to the former embodiment, it is desirable to have a flange a' formed in advance along the upper circumferential edge of the upper half member 21 of the outer green container wall or along the circumference of the opening of the inner green container wall 10. In the present embodiment, the inner green container wall 10 and the upper half member 21 of the outer green contaienr wall are first joined intimately to each other along their upper circumferential edges to produce a partly molded green container having the two green members 10, 21 continue into each other. Then, to the lower edge of the upper half member 21 of the outer green container wall in the aforementioned partly molded green container, the lower hald member 22 of the outer green container wall is applied upwardly as illustrated in FIG. 4 so that the lower half member 22 of the outer green container wall and the lower half part 10b of the inner green container wall 10 are radially opposed to each other. By the technique known to the pottery, the upper edge of the lower half member 22 of the outer green container wall and the lower edge of the upper half member 21 are intimately joined to each other. The green double-wall container thus obtained is dried and, with patterns painted with glaze, fired to produce a double-wall ceramic container B. Thereafter, an insulation 40 is introduced through the perforation in the bottom of the outer green container wall to fill the inner cavity 30 in the double-wall container B in the same way as in the former embodiment. In the diagram, "c" denotes a stopper.

Since the thermally insulated container of this invention contains an insulation made of a foaming resin of low thermal conductivity within the cavity of the double-wall ceramic container, it provides ample thermal insulation, with the low thermal conductivity of the ceramic material itself as a contributory factor. Outwardly, this is essentially a ceramic article. Whether it is finished with the outer surface decorated with patterns of glaze or left unglazed, there is obtained a thermally insulated container abundant with high sense never found in the conventional countertypes and quite suitable for use on a dining table. Particularly the product of this invention illustrated in FIG. 4 constitutes itself a highly convenient _sake_ server in the winter because it is capable of keeping hot _sake_ against quick loss of heat.

WHAT IS CLAIMED IS:

1. A thermally insulated ceramic container, comprising a double-wall ceramic container obtained by firing a molded green container having intimately joined to each other an inner green container wall and an outer green container wall provided in the bottom portion thereof with a perforation and an insulation formed of a foaming resin of low thermal conductivity and contained within the inner cavity of the double wall of the container.

2. A method for the manufacture of a thermally insulated ceramic container, characterized by the steps of preparing an inner green container wall and an outer green container wall one size larger by molding a dough prepared by mixing a raw material for ceramic with water, placing the two green container walls with the former inside the latter, intimately joining the two green container walls along their upper circumferential edges thereby giving rise to a molded green double-wall container having the inner green container wall continue into the outer green container wall provided with a perforation, firing said molded green double-wall container thereby producing a double-wall ceramic container, injecting an unfoamed or semi-foamed foaming resin of low thermal conductivity via said bottom perforation into the inner cavity of said double-wall ceramic container, and foaming said resin thereby filling said inner cavity with an insulation.

0089428

3. A method for the manufacture of a thermally insulated ceramic container, characterized by the steps of preparing an inner green container wall and an upper half member and a lower half member of an outer green container wall one size larger by molding, a dough prepared by mixing a raw material for ceramic with water, placing the upper half portion of said inner green container wall and said upper half member of said outer green container wall with the former inside the latter, intimately joining said two upper half portions along their upper circumferential edges thereby giving rise to a molded green container having the inner green container wall continue into the upper half member of the outer green container wall, placing the lower half portion of the inner green container wall of said molded green container and the lower half member of the outer green container wall with the former inside the latter, intimately joining the upper edge of the lower half member of said outer green container wall and the lower edge of the upper half member of said outer green container wall thereby giving rise to a molded green double-wall container having the inner green container wall continue into the outer green container wall provided with in the bottom thereof with a perforation, firing said molded green container thereby producing a double-wall ceramic container, injecting an unfoamed or semi-foamed resin of low thermal conductivity via said bottom perforation into the inner cavity of said double-wall ceramic container, and foaming said resin thereby filling said inner cavity with an insulation.

Fig.1

Fig.2

Fig.3

Fig.4

## DOCUMENTS CONSIDERED TO BE RELEVANT

| Category | Citation of document with indication where appropriate, of relevant passages | Relevant to claim | CLASSIFICATION OF THE APPLICATION (Int. Cl. 3) |
|---|---|---|---|
| | --- | | A 47 J   41/00 |
| Y | DE-B-2 102 101  (SCHIRNDING A.G.) <br> *The whole document* | 1,2,3 | |
| | --- | | |
| Y | US-A-3 037 652  (WALLACE) <br> *Column 3, lines 56-75; figure 7* | 1,2,3 | |
| | --- | | |
| A | FR-A-  631 184  (THOMAS) <br> *The whole document* | 1,2 | |
| | --- | | |
| A | GB-A-  211 545  (BULTMAN) <br> *The whole document* | 1,2 | |
| | --- | | |
| A | FR-A-1 123 760  (CHENET) <br> *The whole document* | 1 | |
| | --- | | TECHNICAL FIELDS SEARCHED (Int. Cl. 3) |
| A | GB-A-1 002 003  (INSULEX LTD) <br> *The whole document* | 1,2,3 | A 47 J <br> A 47 G |
| | ----- | | |

The present search report has been drawn up for all claims

| Place of search | Date of completion of the search | Examiner |
|---|---|---|
| THE HAGUE | 08-11-1982 | SCHARTZ J. |